# EUROPEAN PATENT SPECIFICATION

(11) **EP 3 911 572 B1**
(45) Date of publication and mention of the grant of the patent: **21.08.2024**
(21) Application number: 20701269.1
(22) Date of filing: 14.01.2020
(51) Int. Cl.: B64C 39/06, B64C 29/00

(54) **AN AIRCRAFT**
EIN FLUGZEUG
UN AÉRONEF

(30) Priority: 17.01.2019 GB 201900682
(43) Date of publication of application: 24.11.2021
(73) Proprietor: Rayne, Damian, London W11 1LR (GB)
(72) Inventor: Rayne, Damian, London W11 1LR (GB)
(74) Representative: Kilburn & Strode LLP
(86) International application number: PCT/EP2020/050835
(87) International publication number: WO 2020/148295

(56) References cited:
- EP-A1- 3 705 401
- DE-A1- 10 041 030
- DE-A1- 3 710 703
- US-A- 2 461 805
- US-A- 5 332 177
- US-A1- 2010 025 541
- US-A1- 2017 197 709

## Description

The present invention relates to an aircraft. In particular, but not exclusively, the present invention may be embodied as an aeroplane or unmanned aerial vehicle (UAV), more particularly still, the present invention may be embodied as a drone, for example a delivery drone for making deliveries of post, packages, parcels and the like.

Traditional aircraft, including airplanes, are designed in many different configurations and may have many different wing configurations. A problem with traditional aircraft however is that they are noisy and pollute the environment as they are generally powered by an internal combustion engine. They can generally also be inefficient in the way in which they handle flow over their wings, leading to wing-tip vortices which are a waste of energy.

US 2010/0025541 A1 discloses a lifting foil.

US 2017/0197709 A1 discloses a compound rotorcraft.

US 2 461 805 A discloses an airplane wing arrangement.

There is also a need, particularly in developing countries or remote areas, for a means of transporting goods and other cargo, for example medication to areas with poor infrastructure and which are difficult to access via traditional transportation means. Drones, i.e. unmanned autonomous aerial vehicles, have been used in such scenarios but generally these are very inefficient, expensive and have very short flight times. It would also be beneficial if the aircraft could be made from sustainable materials, thereby further reducing its environmental impact.

There therefore exists need for an improved aircraft which is smaller, quieter, with increased efficiency, with less environmental pollution, and with increased storage space for cargo.

The present invention aims to alleviate, at least to a certain extent, the problems and/or address at least to a certain extent the difficulties associated with the prior art.

According to one aspect of the present invention, there is provided an aircraft according to claim 1, comprising a fuselage, an anhedral rearwardly-swept leading wing for generating lift connected to an upper portion of the fuselage, and a dihedral forwardly-swept trailing wing for generating lift attached to a lower portion of the fuselage, the trailing wing being arranged to be vertically lower than the leading wing, wherein the leading wing and trailing wing are blended together at their wingtips, forming a common wingtip, such that the underside surface of the leading wing forms a generally continuous and smoothly transitioning surface with the upper surface of the trailing wing so as to, in flight, form a vortex guide surface such that vortex air flow from the leading wing is guided by the vortex guide surface onto, or into the path of, the trailing wing. Such a configuration provides a surprisingly efficient aircraft as energy from wingtip vortices from a first, leading wing may be recovered by redirecting the vortex airflow onto a second, trailing wing, wherein the at least one of the leading and/or trailing wings comprises one or more flow ducts extending therethrough, wherein the ducts comprise at least one motor, for example a turbine, provided therein configured to provide propulsive power to the aircraft.

Optionally, the vortex guide surface comprises a blended surface of the underside surface of the leading wing and the upper surface of the trailing wing. Such a surface provides a smooth and continuous flow path for spanwise flow or vortex flow from the leading wing to transition to the upper surface of the trailing wing and provides a particularly aerodynamic configuration.

Optionally, the upper surface of the leading wing forms a generally continuous surface and smoothly transitioning with the underside surface of the trailing wing.

Optionally, the upper surface of the leading wing is blended with the underside surface of the trailing wing so as to form a generally continuous and smoothly transitioning surface from the upper surface of the leading wing to the underside surface of the trailing wing.

Optionally, the common wingtip extends substantially in a longitudinal direction of the fuselage. Thus, the common wingtip may be shaped so as to conform with or generally follow the path of wingtip vortices formed from the leading wing. Optionally, in some embodiments, the length of the common wingtip may be substantially greater than its width. Optionally, the leading edge of the leading wing may be blended with a nose portion of the aircraft so as to form a continuous surface.

Optionally, the longitudinal axis of the common wingtip is inclined with respect to a longitudinal axis of the fuselage by less than 45 degrees, optionally less than 30 degrees. In other embodiments, the common wingtip may be inclined with respect to a longitudinal axis of the fuselage by less than 35, 25, 20, 15 or 10 degrees, or any intermediate value therebetween. Such a configuration enables the vortex guide surface to more of the common wingtip to more optimally direct vortex flow, for example at high speeds. The sweep axis of the common wingtip, when the common wingtip comprises a swept cross -sectional profile, is inclined with respect to a longitudinal axis of the fuselage by less than 45 degrees, optionally less than 30 degrees.

Optionally, the common wingtip has a length less than 10, 8, or 6 times its width.

Optionally, the common wingtip may have three or more sides.

Optionally, the common wingtip is hollow. Such a feature may increase the stiffness of the common wingtip in flight so as to increase aircraft performance, including stability and manoeuvrability.

Optionally, the common wingtip comprises an internal chamber, for example for storage of electrical cells, for example configured to provide propulsive power to the aircraft. Such an internal chamber, or storage area, may additionally or alternatively be configured to store fuel or cargo.

Optionally, the common wingtip comprises a swept cross-section which generally or substantially twists along the length of the common wingtip. Such a feature provides for improved airflow about the common wingtip and improves the performance of the vortex guide surface.

Optionally, the common wingtip comprises a substantially triangular, or substantially rounded-triangular, lateral cross-section. Thus, the common wingtip may optionally comprise three sides, or in some embodiments it may comprise four, five, six or more sides. A rounded cross-section, such as a rounded-triangular cross section may provide for improved flow characteristics around the common wingtip.

Optionally, the common wingtip is configured such that spanwise airflow on the underside surface of the leading wing is guided by the vortex guide surface onto the upper surface of, or into the path of, the trailing wing by travelling substantially along the length of the common wingtip. Thus, the vortex guide surface may act as a scoop to redirect vortex airflow while minimising flow disturbance.

Optionally, the upper surface of the leading wing and the underside surface of the trailing wing are generally arcuate so as to form a generally curvilinear profile when viewed from the front or rear of the aircraft. Such a configuration provides aerodynamic performance as it may, for example, improve the quality of spanwise flow by reducing spanwise flow disturbances, for example, before reaching the vortex guide surface. Such a configuration may also reduce vortex shredding off of the trailing wing.

Optionally, the anhedral angle of the leading wing on each lateral side of the aircraft and the dihedral angle of the trailing wing on each lateral side of the aircraft continuously and smoothly increases along the span of each wing away from the fuselage so as to form a generally curvilinear, or hoop-shaped, profile when viewed from the front or rear of the aircraft. Such a configuration provides aerodynamic performance as it may, for example, improve the quality of spanwise flow by reducing spanwise flow disturbances, for example, before reaching the vortex guide surface. Such a configuration may also reduce vortex shredding off of the trailing wing.

Optionally, the leading edge of the leading wing and the trailing edge of the trailing wing are generally straight so as to form a generally kite-shaped, or rhomboid, profile when viewed from above or below.

Optionally, the upper surface is the low pressure surface, or extrados surface, of the wing, and the underside surface is the high pressure surface, or intrados surface, of the wing.

Optionally, the vortex guide surface is configured to direct vortex air flow so as to impinge on the leading edge of the trailing wing. Thus, the vortex guide surface may recover energy from wingtips vortices which would otherwise have been lost by redirecting the airflow over, or into the path of, the trailing wing.

Optionally, the vortex guide surface is configured to direct vortex air flow so as to be generally in line (for example, laterally, longitudinally or vertically) with the chord or a stagnation point of the trailing wing.

Optionally, the fuselage passes within an annular space formed between the leading wing and the trailing wing.

Optionally, the leading wing is attached to an upper portion of the fuselage which is above a pitch axis, or roll axis, of the aircraft and wherein the leading wing is attached to a lower portion of the fuselage which is below a pitch axis, or roll axis, of the aircraft.

Optionally each wing comprises six flow ducts: three flow ducts on each side of the fuselage on the leading wing and three flow ducts on each side of the fuselage on the trailing wing.

Optionally, the flow ducts extend from a high pressure surface of the wing to a low pressure surface of the wing. Thus, in flight, there exists a pressure gradient across the flow ducts, which may be used to drive a turbine or provide improved performance to an engineer or propeller or fan provided in the flow ducts. Optionally, the flow duct may have an inlet ahead i.e. in the direction towards the front of the aircraft, of the flow duct exhaust outlet.

Optionally, the flow ducts extend from a stagnation area of the wing to a surface of the wing having a lower pressure than at the stagnation area. Thus, in flight, there exists a pressure gradient across the flow ducts, which may be used to drive a turbine or provide improved performance to an engine or propeller or fan provided in the flow ducts. Optionally, the flow duct may have an inlet ahead i.e. in the direction towards the front of the aircraft, of the flow duct exhaust outlet.

Optionally, the flow ducts extend from a low pressure surface of the wing to a high pressure surface of the wing. Optionally, the flow duct may have an inlet ahead i.e. in the direction towards the front of the aircraft, of the flow duct exhaust outlet.

Optionally, the flow ducts extend from the upper surface, or extrados surface, of the wing to the lower surface, or intrados surface, of the wing. Optionally, the flow duct may have an inlet ahead i.e. in the direction towards the front of the aircraft, of the flow duct exhaust outlet.

Optionally, the vortex guide surface is configured to direct air flow into the flow ducts. Thus, the vortex guide surface may be configured to direct air flow into an inlet of the flow ducts. Such a configuration provides that energy from vortices may be recovered and used to drive a turbine, fan or propeller provided in the fan ducts. In some embodiments, the fan ducts may comprise a convergent-divergent nozzle.

Optionally, the at least one motor is a turbine or gas turbine or electrically-powered turbine or propeller or fan. Alternatively, the ducts may comprise a ducted fan or a propeller.

Optionally, the ducts are provided on at least one pivotable section of the wingspan of at least one of the leading and the trailing wings so as to provide thrust vectoring. Optionally, the pivotable sections are pivotable about a substantially lateral axis of the wing or fuselage or an axis substantially parallel to the pivot axis of the aircraft.

Optionally, the leading wing and the trailing wing each comprise at least two pivotable sections: one on each side of the fuselage on each wing.

Optionally, at least one pivotable section of the wingspan is independently pivotable with respect to at least one other pivotable section, optionally wherein each pivotable section of the wingspan is independently pivotable with respect to each other.

Optionally, the pivotable sections are configured to be pivotable from a cruise configuration to a vertical take-off and landing configuration.

Optionally, in the vertical take-off and landing configuration, the pivotable sections are configured to pivot sufficiently such that the combined thrust vector provided by the engines provided within the pivotable sections is sufficient to generally or substantially equal the weight vector of the aircraft.

Optionally, the aircraft is an aeroplane or a UAV.

Optionally, at least one of the leading wing or the trailing wing or the fuselage is made from a hemp and epoxy composite.

Optionally, at least one of the leading wing or the trailing wing comprises solar panels provided on the upper surface thereof.

Optionally, both the leading and trailing wings are blended into the fuselage so as to form a blended wing body.

Optionally, an upper surface of the fuselage forms a blended common upper surface with the upper surface of the leading wing, and wherein a lower surface of the fuselage forms a blended common lower surface with the lower surface of the trailing wing.

Optionally, the leading wing is attached to a forward second of the fuselage and the trailing wing is attached to an aft section of the fuselage.

Optionally, the leading wing is attached to the fuselage ahead of a pitch axis of the aircraft and wherein the trailing wing is attached to the fuselage behind a pitch axis of the aircraft.

Optionally, the vortex guide surface is generally or substantially twisted along its length. Alternatively the vortex guide surface is generally or substantially twisted along the length of the common wingtip (i.e. along or parallel to the longitudinal length of the aircraft).

The present invention may be carried out in various ways and a preferred embodiment of an aircraft in accordance with the invention will now be described by way of example with reference to the accompanying drawings, in which:
Fig. 1 is a perspective, partially transparent view of a preferred embodiment of an aircraft 1 according to the present invention, viewed looking down on the aircraft in the cruise configuration, with the nose of the aircraft in the foreground and the aft in the background of the image. As can be seen, the aircraft body is substantially blended, that is many of the surfaces are substantially continuously and smoothly transitioning into one another and a mesh is shown in order to illustrate the curvature of the blended surfaces.
Fig. 2 is a perspective, partially transparent view of the embodiment of Fig. 1, showing the underside of the aircraft in a cruise configuration.
Fig. 3 is a cross-sectional view of the embodiment of Fig. 1 taken approximately half way along the common wing tip along a lateral plane, viewing the trailing wing of the aircraft and an internal cargo area.
Fig. 4 is longitudinal cross-sectional view of the embodiment of Fig. 1 taken approximately half way across the fuselage, again showing the internal cargo area.
Fig. 5 is a partial cross-sectional view of the embodiment of Fig. 1 showing the aircraft from the front. The internal cargo area is shown in broken lines.
Fig. 6 is a plan view of the aircraft of Fig. 1 taken from above. The internal cargo area is shown in broken lines.
Fig. 7 is a partial cross-sectional schematic view of a flow duct of the trailing wing of the embodiment of Fig. 1, with the turbine shown within the flow duct.
Fig. 8 is a perspective, partially transparent view, similar to that of Fig. 1, of the aircraft of Fig. 1 shown in the VTOL configuration.
Fig. 9 is a perspective, partially transparent view, similar to that of Fig. 2, of the aircraft of Fig. 1 shown in the VTOL configuration.

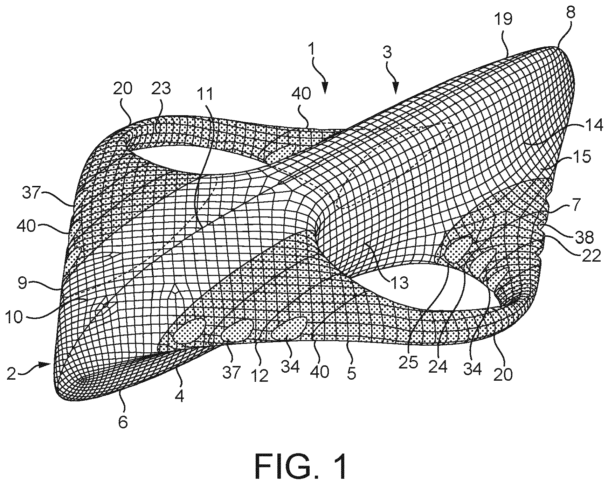

The aircraft 1 comprises a fuselage 4, the fuselage 4 itself comprising a nose 2 at the end of the forward portion 6 thereof. An anhedral rearwardly-swept leading wing 5 extends from each lateral side 13 of the aircraft 1 from a forward portion 6 of the fuselage 4. The leading wings 5 are configured to generate lift for the aircraft 1 and comprise an aerofoil cross-section, although examples wherein lift is generated solely by thrust vectoring are also envisaged. The leading wings 5 are said to be leading wings as they are positioned on the fuselage 3 such that they lead, i.e. are ahead of, the trailing wings 7 in normal flight. Each leading wing 5 is arranged on the fuselage 4 such that it is attached to an upper portion 8 of the fuselage 4. In the preferred example shown, each leading wing 5 is blended with the fuselage 4 such that the upper surface 9 of the leading wings 5 blends smoothly and continuously with a substantially flat and horizontal (i.e. extends substantially in the lateral and longitudinal directions of the fuselage or aircraft) upper surface 10 of the fuselage 4 which is towards the front of the aircraft 1 and forms a blended common upper surface 11 which is said to be common as it is common with both the upper surface 10 of the fuselage 4 and the upper surface 9 of each leading wing 5. This blended common upper surface 11 optionally blends smoothly and continuously with the nose 2 of the aircraft by curving smoothly downwards towards the front of the aircraft 1. The leading edge 12 of the leading wings 5 may also optionally blend smoothly with the nose 3 of the aircraft. The leading wings 5 may also be arranged above the roll and/or pitch axis of the aircraft 1, as in Fig. 1, although this may be an optional feature.

The trailing wings 7 are each a dihedral rearwardly-swept trailing wing. A trailing wing 7 extends from each lateral side 13 of the aircraft 1 from a rearward, or aft, portion 14 of the fuselage 4. Each trailing wing 7 is configured to generate lift for the aircraft and comprises an aerofoil cross-section, although examples wherein lift is generated solely by thrust vectoring are also envisaged. Each trailing wing 7 is said to be a trailing wing as it is positioned on the fuselage 4 such that it trails, i.e. is behind, the leading wing 5 in normal flight. The trailing wings 7 are arranged on the fuselage 4 such that they are attached to a lower portion 15 of the fuselage 4. In the preferred example shown, each trailing wing 7 is blended with the fuselage 4 such that the underside surface 35 of each of the trailing wings 7 blends smoothly and continuously with a substantially flat and horizontal (i.e. extends substantially in the lateral and longitudinal directions of the fuselage or aircraft) underside surface 17 of the fuselage 4 which is towards the rear 19 of the aircraft 1 and forms a blended common underside surface 18 which is said to be common as it is common with both the underside surface 17 of the fuselage 4 and the underside surface 35 of each trailing wing 7. This blended common underside surface 18 optionally blends smoothly and continuously with the rear 19 of the aircraft 1 by curving smoothly upwards towards the rear 19 of the aircraft 1. The trailing edge of the trailing wings 7 may also blend smoothly with the rear 19 of the aircraft 1. The trailing wings 7 may also be said to be arranged above the roll and/or pitch axis of the aircraft, although this may be an optional feature. The terms "lower" and "underside" when used in reference to a surface may be used interchangeably herein.

The configuration of an aircraft 1 according to the present invention as described herein is particularly advantageous as it provides a large surface area for solar panels (which may be provided on certain surfaces of the aircraft for example on the upper surfaces of the leading and trailing wings), while providing a large internal volume, for example for increased storage of cargo. Furthermore the bi-plane configuration results in greater lift in return for less thrust. The blended wing design ducts flow from high to low delta, increasing lift component on the rear wing whilst eliminating energy losses of wing tip vortices. This configuration results in a low wake turbulence signature.

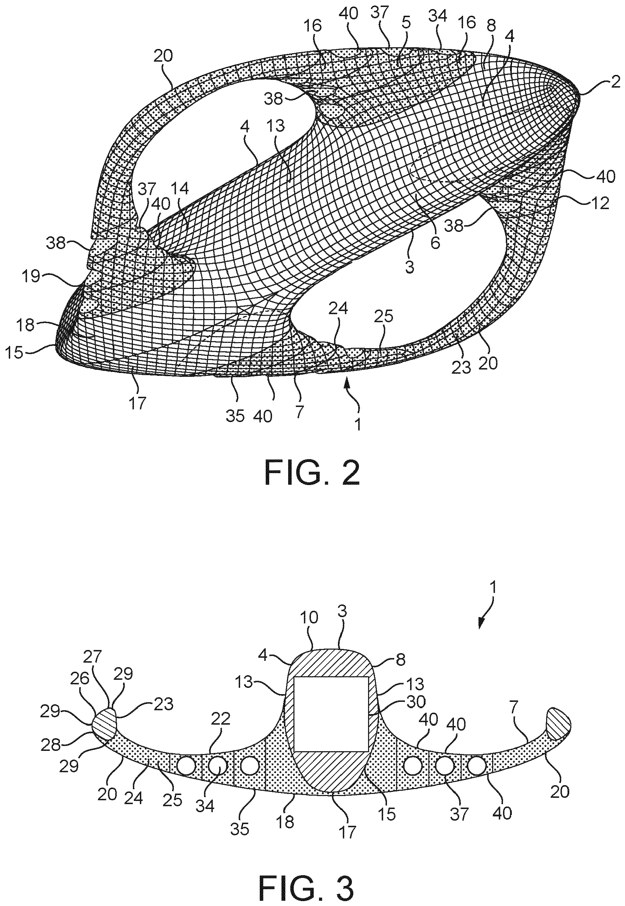

Fig. 2 shows the embodiment of Fig. 1 but from an underside perspective view and also includes a mesh wire-frame so as to illustrate the curvature of the surfaces. As can be seen with reference to both Fig. 1 and Fig. 2, each pair of the trailing 7 and leading 5 wings are blended together to form a common wingtip 20 laterally distal from the fuselage 4. By following the respective surfaces, it can be seen that the underside surface 16 of the leading wing 5 forms a generally continuous and smoothly transitioning surface (i.e blended surface) with the upper surface 22 of the trailing wing 7. In this way, each common wingtip 20 on each side of the aircraft 1 comprises a vortex guide surface 23 such that vortex air flow from the leading wing 5 is guided by the vortex guide surface 23 onto, or into the path of, the trailing wing 7 so as to impinge on the leading edge 24 of the trailing wing 7, for example at a stagnation point 25 thereof. Advantageously, the configuration of the vortex guide surface 23 may be such that it accelerates the vortex flow to thereby provide increased lift on the upper surface of the trailing wing 7. Highly advantageously, such a vortex guide surface 23 is able to recover some of the energy of the air flow of vortices which may shred from the leading wing 5 by redirecting, or at least confining, the vortex air flow such that the trailing wing 7 is exposed to the vortex flow, thereby enabling some of the vortex air flow energy to be recovered as lift. Similarly, although optionally, the upper surface 9 of the leading wing 5 forms a generally continuous and smoothly transitioning surface (i.e. blended surface) with the underside surface 35 of the trailing wing 7.

The common wingtip extends in a substantially longitudinal direction of the aircraft, from the leading wing, at the front of the aircraft, to the trailing wing, at the rear of the aircraft. Thus the common wingtip spans unsupportedly across the leading wing and the trailing wing, adjoining to two. The common wingtip is generally inclined longitudinally, i.e. the general longitudinal axis (or the longitudinal axis of the common wingtip taken at a point approximately half way along its length) of the common wingtip is inclined with respect to the longitudinal axis of the aircraft or the fuselage. This angle of inclination may be less than 60 degrees, less than 55 degrees, less than 45 degrees, or less than 40, 30, 25, 20, 15, 10 or 5 degrees or any integer number or range in between these values. The common wingtip is substantially elongate and has a length (i.e. from the leading wing to the trailing wing) of about 10 times its width (or thickness), for example 9, 8, 7, 6, 5, 4, 3 or 2 times its width (or thickness).

The common wingtip 20 also has a generally or substantially triangular or rounded-triangular shape 26 in cross-section, as can be seen in the front-on cross-sectional view of Fig. 3 which is taken approximately half way along the length of the common wingtip 20 so as to view the trailing wing 7. The cross-sectional shape 26 of the common wingtip 20 comprises three surfaces 27, 28, 23 with rounded, or blended, corners 29 where they meet. The inner-most surface 23 (i.e. that which is closes to the fuselage 4) in this view is the vortex guide surface 23 whereby vortex air flow is guided by the vortex guide surface 23 onto the upper surface 22 of, or into the path of, the trailing wing 7 by travelling substantially along the length of (i.e. in a longitudinal direction of) the common wingtip 20.

As can be seen from a comparison of Figs. 1, 2 and 3, the cross-section 26 of the common-wingtip 20 is swept along its length such that the surfaces 27, 28, 23 rotate, or twist, along the length of the common wing-tip 20. In Fig. 3 for example, the vortex guide surface 23 of the common wingtip 20 of the right-hand side of the image rotates in a clock-wise direction and the vortex guide surface 23 of the common wingtip 20 of the left-hand side of the image rotates in a counter-clock-wise direction as a result of the blending of the underside surface 16 of the leading wing 5 with the uppermost surface 22 of the trailing wing 7.

In the example shown, the common wingtip 20 is substantially solid throughout its thickness and therefore does not comprise an internal compartment, chamber or space of any kind. Examples are however envisaged wherein the common wingtip is hollow. In such examples the walls of the common wingtip 20 may be thin-walls or shells but in other examples the walls may be non-thin and/or may be structurally load-bearing walls. In still other examples, the common wingtip 20 comprises an internal compartment which may be configured for storage, for example of cargo or for electrical cells or batteries configured to supply propulsive power to the aircraft by supplying propulsion means 36 of the aircraft (for example a motor, propeller, turbine 39 etc). In some examples, the internal compartment may comprise a structural frame which is configured to both provide structural strength to the common wingtip 20 surfaces as well as providing a mounting frame for the batteries.

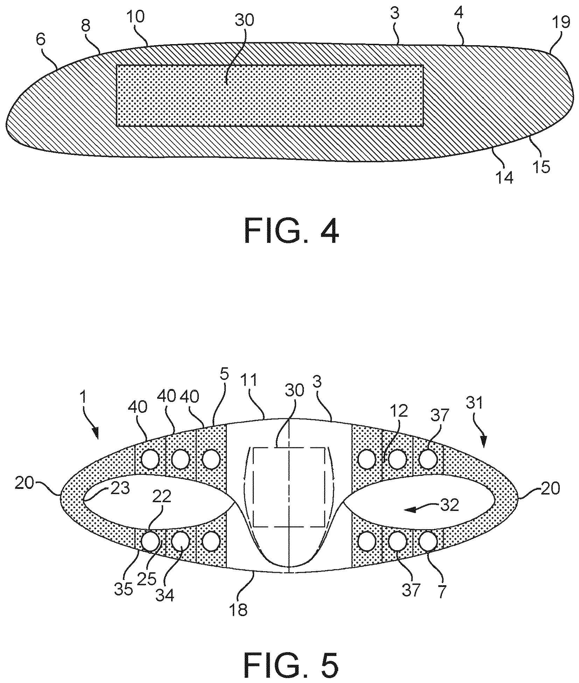

The fuselage 4 may comprise a cargo area 30 in its interior for transportation of goods and this cargo area 30 can be seen in Fig 4, which shows a cross section of the aircraft 1 taken along lateral side 13 of the aircraft 1, along the longitudinal axis of the aircraft 1. The cargo area 30 may also be seen in the longitudinal cross-sectional view of Fig. 3.

Turning now to Fig. 5, a front-on view of the aircraft 1 can be seen. The leading wings 5 are anhedral wings and the trailing wings 7 are dihedral wings. This configuration, in combination with the leading wing 5 being located at, or attached to, an upper portion 8 of the fuselage 4 (or above a pitch or roll axis of the aircraft 1) and the trailing wing 7 being located at, or attached to, a lower portion 15 of the fuselage 4 (or below a pitch or roll axis of the aircraft 1) has been found to be particularly advantageous as it provides for greater stability and efficiencies in flight. For example, the trailing wing 7 is suitably positioned such that the vortex guide surface 23 guides vortex flow from the leading wing 5 onto the trailing wing 7 in the most advantageous way, although other positions of the leading 5 and trailing wings 7 relative to each other may also be used. The anhedral angle of the upper surface 9 of the leading wing 5 (the angle from horizontal, or from a lateral axis of the aircraft) increases smoothly and/or continuously along the span of each leading wing 5, in the direction away from the fuselage 4 towards the common wingtip 20. Similarly, the dihedral angle of the underside surface 35 of the trailing wing 7 (the angle from horizontal, or from a lateral axis of the aircraft 1) increases smoothly and/or continuously along the span of each trailing wing 7, away from the fuselage 4 towards the common wingtip 20. In this way a generally curvilinear, or hoop-shaped profile 31 is formed by the trailing 7 and leading 5 wings, joined by the common wingtips 20, when viewed from the front or rear of the aircraft 1, with the fuselage 4 passing within an annular space 32 formed between the laterally and vertically spaced apart leading wing 5 and the trailing wing 7. Such a configuration has been found to be particularly stable in flight and compresses air flowing between the leading 5 and trailing 7 wings, within the annular space 31.

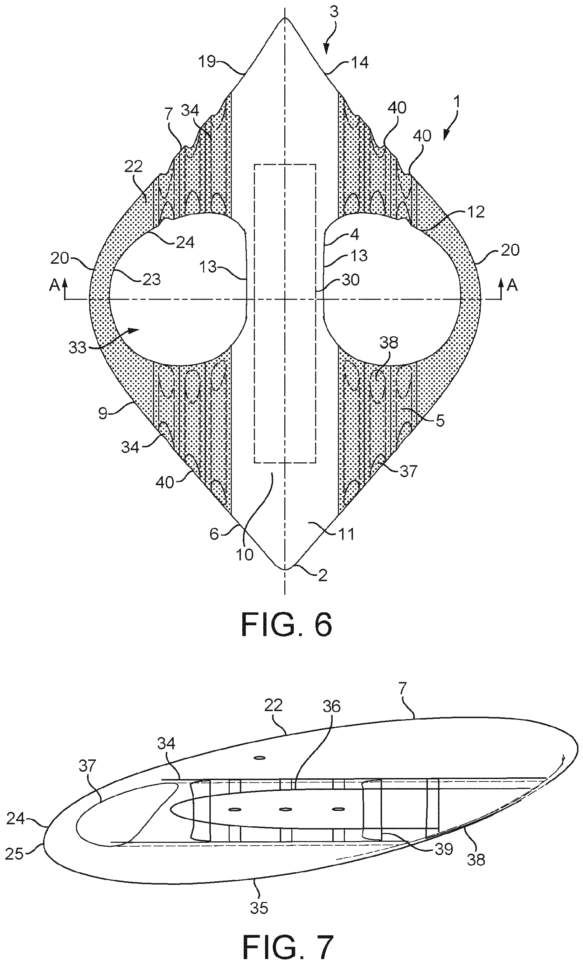

Fig. 6 shows a plan view of the aircraft 1. The shape of the leading edge 12 of each of the leading wings 5 is such that the leading edges 12 form a substantially or generally straight line on each side of the aircraft 1 with the nose 3 of the aircraft 1 (which in this view is at the bottom of the figure) when viewed in plan, the nose 3 being shaped so as to form a rounded point at its centre where the two straight lines formed by the leading edges and the nose meet. Thus, the leading edge 12 of the leading wing 5 is substantially or generally straight, although examples wherein the leading edge 12 is curved, for example being increasingly swept back along its length, are also envisaged. Similar to the leading wings 5, each trailing wing 7 is shaped such that their trailing edges form a generally straight line with the tail 19 of the aircraft 1, the tail 19 being shaped so as to form a rounded point at its center where the two straight lines formed by the trailing edges and the tail meet. Thus, the outer perimeter of the aircraft 1 defines a substantially or generally kite-shaped, or rhomboid, profile when viewed from above or below, as can be seen in Fig. 6, the shape being formed at least mainly by the leading edge 12 of the leading wings 5 and the trailing edge of the trailing wings 7, as well as the outer perimeter of the common wingtips 20.

As can also be seen in Fig. 6, the leading 5 and trailing 7 wings are shaped and laterally spaced apart such that, in plan view, the trailing edge of the leading wing 5, the common wingtip 20, the leading edge 24 of the trailing wing 7 and the fuselage 4 together define a generally circular, or rounded void 33 therebetween.

With reference again to Fig. 1, each of the leading 5 and trailing 7 wings comprise flow ducts 34 within which propulsion means 36 are provided for propelling the aircraft 1, the flow ducts 34 having a flow inlet 37 provided at a low pressure surface of each wing 5, 7 and a flow outlet 38 provided at a high pressure surface of each wing 5, 7. In the example shown, each wing 5, 7 comprises three such flow ducts, although any number could alternatively be used, for example 2, 4, 5, 6, 7, 8, 9 or 10 or any other integer number. Alternatively still, other locations for the propulsion means 36 could be used. The inlet 37 of the flow ducts 34 is provided towards the leading edges of the wings 5, 7 and the outlet 38 is provided towards the trailing edges of the wings 5, 7. The inlet 37 and outlet 38 are shaped so as to present a substantially circular opening to the flow, as viewed from the front or rear of the aircraft 1. In the example shown, as can be more clearly seen in Fig. 7, the flow ducts 34 are substantially straight along their length and have a turbine 39 provided therein, although propellers or other such propulsive devices could alternatively be used. The flow ducts 34 do not have to be straight and can instead take a circuitous path from the low pressure surface of the wing 5, 7 to the high pressure surface of the wing 5, 7. Examples are also envisaged wherein the inlets 37 of the flow ducts 34 are provided on a high pressure surface of the wing 5, 7 and the outlets 38 are provided on a low pressure surface of the wing 5, 7. In this way, the turbine may take advantage of the natural flow from the high pressure inlet 37 to the low pressure outlet 38 and may mean that smaller compressors for the turbine 39 can be used. In the embodiment shown, although an optional feature, the vortex guide surface 23 is configured to guide vortex air into the inlet 37 of the trailing wing 7 ducts 34. The flow ducts 34 may also comprise flow acceleration means, such as a choke or a convergent-divergent nozzle. The flow ducts 34 may be provided in some embodiments on only the leading wings (and not the trailing wings) or vice versa.

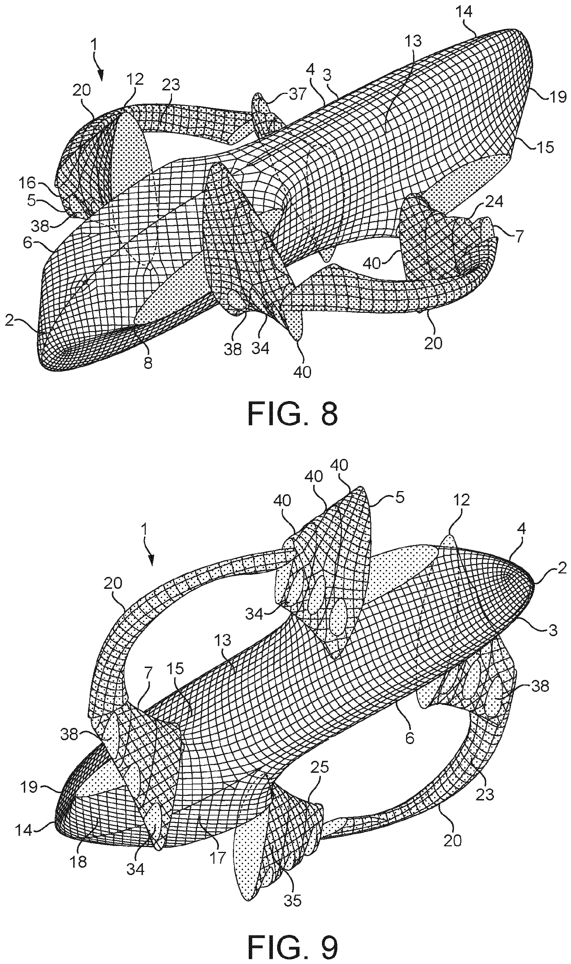

In the embodiment of the figures, and as can be seen in Figs. 8 and 9 more particularly, the flow ducts 34 are provided in sections of the leading wing 5 and trailing wing 7 which are configured to pitch forward and rearward about a lateral axis of the aircraft 1, that is to say pivot generally forward and rearward (or about an axis which is generally parallel or aligned with the chord of the wing 5, 7, or generally perpendicular to the longitudinal axis of the aircraft 1), so as to cause a thrust pitch moment about the aircraft 1 so as to cause the aircraft to pitch. Thus, thrust vectoring may be provided. In the embodiment shown, each leading 5 and trailing 7 wing has a plurality of pivotable sections 40 each comprising a flow duct 34. Each pivotable section of each wing is adjacent to the others, although examples wherein one or more are spaced apart along the chord of the wing 5, 7 are also envisaged. In the embodiment shown, each pivotable section 40 is independently pivotable with respect to at least one other pivotable section 40 of the same wing or of a different wing, thus providing for finer control of thrust vectoring and providing greater aircraft manoeuvrability. Embodiments are envisaged wherein the flow ducts are not provided in pivotable sections 40 of the trailing wing 7 and/or leading wing 5, but are instead provided on fixed portions of the wing 5, 7. Further, embodiments wherein pivotable sections 40 of wing are not provided are also envisaged. Embodiments are also envisaged wherein some of the flow ducts 34 are provided on pivotable sections 40 and others on fixed sections of the leading 5 and/or trailing 7 wings. In the embodiment shown, each of the trailing wings 7 and the leading wings 5 comprise three flow ducts 34. The pivotable sections 40 may be pivotable to such an extent so as to provide for vertical take off and landing (VTOL) of the aircraft 1 (such that the combined thrust vector provided by the propulsion means 36 provided within the pivotable sections is sufficient to generally or substantially equal or exceed the weight vector of the aircraft 1). Thus, in some embodiments, a VTOL aircraft 1 is provided. In the cruise configuration of VTOL embodiments, the pivotable sections 40 return to the position shown in Fig. 1 , the so-called cruise configuration, so as to form a common wing surface on both the upper surface and lower surface of the leading and trailing wings. The propulsion means 36 (motors/fans/engines/propellers/turbines 39) within the flow ducts 34 may be individually controlled so as to provide yaw control of the aircraft 1.

The body 3 of the aircraft 1, particularly the wings 5, 7 or the fuselage 4, may be made form a hemp composite. A hemp composite is particularly advantageous due to its strength and ability to be cultivated sustainably in subtropical and African climates. Other composites and non-composites (such as polymers including high temperature 3D-printable polymers) may be used.

## Claims

1. An aircraft (1) comprising a fuselage (4), an anhedral rearwardly-swept leading wing (5) for generating lift connected to an upper portion (8) of the fuselage (4), and a dihedral forwardly-swept trailing wing (7) for generating lift attached to a lower portion (15) of the fuselage (4), the trailing wing (7) being arranged to be vertically lower than the leading wing (5), wherein the leading wing (5) and trailing wing (7) are blended together at their wingtips, forming a common wingtip (20), such that the underside surface (16) of the leading wing (5) forms a generally continuous and smoothly transitioning surface with the upper surface (22) of the trailing wing (7) so as to, in flight, form a vortex guide surface (23) such that vortex air flow from the leading wing (5) is guided by the vortex guide surface (23) onto, or into the path of, the trailing wing (7), **characterised in that** at least one of the leading (5) and/or trailing (7) wings comprises one or more flow ducts (34) extending therethrough, and **in that** the ducts (34) comprise at least one motor (36), for example a turbine, provided therein configured to provide propulsive power to the aircraft.

2. The aircraft (1) of Claim 1, wherein the vortex guide surface (23) comprises a blended surface of the underside surface (16) of the leading wing (5) and the upper surface (22) of the trailing wing (7); optionally in which the upper surface (22) of the leading wing (5) forms a generally continuous surface and smoothly transitioning with the underside surface (16) of the trailing wing (7); optionally wherein the upper surface (22) of the leading wing (5) is blended with the underside surface (16) of the trailing wing (7) so as to form a generally continuous and smoothly transitioning surface from the upper surface (22) of the leading wing (5) to the underside surface (16) of the trailing wing (7).

3. The aircraft (1) of any preceding claim, wherein the common wingtip (20) extends substantially in a longitudinal direction of the fuselage (4); optionally wherein the longitudinal axis of the common wingtip (20) is inclined with respect to a longitudinal axis of the fuselage (4) by less than 45 degrees, optionally less than 30 degrees; optionally wherein the common wingtip (20) has a length less than 10, for example 9, 8, 7, 6, 5, 4, 3 or 2, times its width.

4. The aircraft (1) of any preceding claim, wherein the common wingtip (20) is hollow; optionally wherein the common wingtip (20) comprises an internal chamber, for example for storage of electrical cells, for example configured to provide propulsive power to the aircraft (1).

5. The aircraft (1) of any preceding claim, wherein the common wingtip (20) comprises a swept cross-section which generally or substantially twists along the length of the common wingtip (20); optionally wherein the common wingtip (20) comprises a substantially triangular, or substantially rounded-triangular, lateral cross-section (26); optionally wherein the vortex guide surface (23) is generally or substantially twisted along its length.

6. The aircraft (1) of any preceding claim, wherein the common wingtip (20) is configured such that spanwise airflow on the underside surface (16) of the leading wing (5) is guided by the vortex guide surface (23) onto the upper surface (22) of, or into the path of, the trailing wing (7) by travelling substantially along the length of the common wingtip (20); optionally wherein the upper surface is a low pressure surface, or extrados surface, of the wing, and the underside surface is a high pressure surface, or intrados surface, of the wing.

7. The aircraft (1) of any preceding claim, wherein the upper surface (9) of the leading wing (5) and the underside surface (35) of the trailing wing (7) are generally arcuate so as to form a generally curvilinear profile (31) when viewed from the front or rear of the aircraft (1); optionally wherein the anhedral angle of the leading wing (5) on each lateral side of the aircraft (1) and the dihedral angle of the trailing wing (7) on each lateral side of the aircraft (1) continuously and smoothly increases along the span of each wing away from the fuselage (4) so as to form a generally curvilinear, or hoop-shaped, profile (31) when viewed from the front or rear of the aircraft (1); optionally wherein the leading edge (12) of the leading wing (5) and the trailing edge of the trailing wing (7) are generally straight so as to form a generally kite-shaped, or rhomboid, profile when viewed from above or below.

8. The aircraft (1) of any preceding claim, wherein the vortex guide surface (23) is configured to direct vortex air flow so as to impinge on the leading edge (24) of the trailing wing (7); optionally wherein the vortex guide surface (23) is configured to direct vortex air flow so as to be generally in line with the chord or a stagnation point (25) of the trailing wing (7).

9. The aircraft (1) of any preceding claim, wherein the fuselage (4) passes within an annular space (32) formed between the leading wing (5) and the trailing wing (7); optionally wherein the leading wing (5) is attached to an upper portion (8) of the fuselage (4) which is above a pitch axis, or roll axis, of the aircraft (1) and wherein the trailing wing (7) is attached to a lower portion (15) of the fuselage (4) which is below a pitch axis, or roll axis, of the aircraft (1).

10. The aircraft of Claim 1, wherein the flow ducts (34) extend from a high or low pressure surface of the wing (5, 7) to a low or high pressure surface of the wing (5, 7), respectively; or wherein the flow ducts (34) extend from a stagnation area (25) of the wing (5, 7) to a surface of the wing having a lower pressure than at the stagnation area (25).

11. The aircraft of Claim 1, wherein the flow ducts (34) extend from the upper surface (9, 22), or extrados surface, of the wing to the lower surface, or intrados surface, of the wing (5, 7); optionally wherein the vortex guide surface (23) is configured to direct air flow into the flow ducts (34).

12. The aircraft (1) of claim 1, 10 or 11, wherein the ducts (34) are provided on at least one pivotable section (40) of the wingspan of at least one of the leading (5) and the trailing wings (7) so as to provide thrust vectoring; optionally wherein the leading wing (5) and the trailing wing (7) each comprise at least two pivotable sections (40): one on each side of the fuselage (4) on each wing (5, 7).

13. The aircraft (1) of Claim 12, wherein at least one pivotable section (40) of the wingspan is independently pivotable with respect to at least one other pivotable section, optionally wherein each pivotable section (40) of the wingspan is independently pivotable with respect to each other; optionally wherein the pivotable sections (40) are configured to be pivotable from a cruise configuration to a vertical take-off and landing configuration; optionally wherein in the vertical take-off and landing configuration, the pivotable sections (40) are configured to pivot sufficiently such that the combined thrust vector provided by the engines (39) provided within the pivotable sections is sufficient to generally or substantially equal the weight vector of the aircraft (1).

14. The aircraft (1) of any preceding claim, wherein both the leading (5) and trailing wings (7) are blended into the fuselage (4) so as to form a blended wing body; optionally wherein an upper surface (10) of the fuselage (4) forms a blended common upper surface (11) with the upper surface (9) of the leading wing (5), and wherein a lower surface of the fuselage (4) forms a blended common lower surface with the lower surface of the trailing wing (7); optionally wherein the leading wing (5) is attached to a forward section of the fuselage (6) and the trailing wing (7) is attached to an aft section of the fuselage (14); optionally wherein the leading wing (5) is attached to the fuselage (4) ahead of a pitch axis of the aircraft and wherein the trailing wing (7) is attached to the fuselage (4) behind a pitch axis of the aircraft.

## Patentansprüche

1. Flugzeug (1), umfassend einen Rumpf (4), einen nach hinten gepfeilten Vorderflügel (5) mit Negativ-V-Stellung zur Erzeugung von Auftrieb, der mit einem oberen Abschnitt (8) des Rumpfes (4) verbunden ist, und einen nach vorne gepfeilten Nachflügel (7) mit Positiv-V-Stellung zur Erzeugung von Auftrieb, der an einem unteren Abschnitt (15) des Rumpfes (4) angebracht ist, wobei der Nachflügel (7) so angeordnet ist, dass er vertikal niedriger als der Vorflügel (5) ist, wobei der Vorflügel (5) und der Nachflügel (7) an ihren Flügelspitzen miteinander verschmolzen sind und eine gemeinsame Flügelspitze (20) bilden, sodass die untere Fläche (16) des Vorflügels (5) eine im Allgemeinen kontinuierliche und sanft übergehende Fläche mit der oberen Fläche (22) des Nachflügels (7) bildet, um im Flug eine Wirbelleitfläche (23) zu bilden, sodass die Wirbelluftströmung vom Vorflügel (5) durch die Wirbelleitfläche (23) auf oder in den Weg des Nachflügels (7) geleitet wird, **dadurch gekennzeichnet, dass** mindestens einer des Vorflügels (5) und/oder des Nachflügels (7) einen oder mehrere hindurch erstreckende Strömungskanäle (34) umfasst und dass die Kanäle (34) mindestens einen Motor (36), beispielsweise eine Turbine, umfassen, der darin vorgesehen und dazu ausgelegt ist, dem Flugzeug Antriebskraft zu verleihen.

2. Flugzeug (1) nach Anspruch 1, wobei die Wirbelleitfläche (23) eine Mischfläche aus der Unterseite (16) des Vorflügels (5) und der Oberseite (22) des Nachflügels (7) umfasst; optional, wobei die obere Fläche (22) des Vorflügels (5) eine im Allgemeinen kontinuierliche Fläche bildet und sanft in die untere Fläche (16) des Nachflügels (7) übergeht; optional, wobei die obere Fläche (22) des Vorflügels (5) mit der unteren Fläche (16) des Nachflügels (7) verschmilzt, sodass eine im Allgemeinen kontinuierliche und sanft übergehende Fläche von der oberen Fläche (22) des Vorflügels (5) zur unteren Fläche (16) des Nachflügels (7) gebildet wird.

3. Flugzeug (1) nach einem der vorhergehenden Ansprüche, wobei sich die gemeinsame Flügelspitze (20) im Wesentlichen in einer Längsrichtung des Rumpfes (4) erstreckt; optional, wobei die Längsachse der gemeinsamen Flügelspitze (20) in Bezug auf eine Längsachse des Rumpfes (4) um weniger als 45 Grad, optional weniger als 30 Grad, geneigt ist; optional, wobei die gemeinsame Flügelspitze (20) eine Länge von weniger als dem 10-fachen, beispielsweise dem 9-, 8-, 7-, 6-, 5-, 4-, 3- oder 2-fachen, ihrer Breite aufweist.

4. Flugzeug (1) nach einem der vorhergehenden Ansprüche, wobei die gemeinsame Flügelspitze (20) hohl ist; optional, wobei die gemeinsame Flügelspitze (20) eine innere Kammer, beispielsweise zur Aufnahme von elektrischen Zellen, umfasst, die beispielsweise dazu ausgelegt sind, das Flugzeug (1) mit Antriebskraft zu versorgen.

5. Flugzeug (1) nach einem der vorhergehenden Ansprüche, wobei die gemeinsame Flügelspitze (20) einen gepfeilten Querschnitt aufweist, der im Allgemeinen oder im Wesentlichen entlang der Länge der gemeinsamen Flügelspitze (20) verdreht ist; optional, wobei die gemeinsame Flügelspitze (20) einen im Wesentlichen dreieckigen, oder im Wesentlichen abgerundeten dreieckigen, seitlichen Querschnitt (26) aufweist; optional, wobei die Wirbelleitfläche (23) im Allgemeinen oder im Wesentlichen entlang ihrer Länge verdreht ist.

6. Flugzeug (1) nach einem der vorhergehenden Ansprüche, wobei die gemeinsame Flügelspitze (20) so ausgelegt ist, dass die Luftströmung in Spannweitenrichtung an der unteren Fläche (16) des Vorflügels (5) durch die Wirbelleitfläche (23) auf die obere Fläche (22) oder in den Weg des Nachflügels (7) geleitet wird, indem sie im Wesentlichen entlang der Länge der gemeinsamen Flügelspitze (20) verläuft; optional, wobei die obere Fläche eine Niederdruckfläche oder Extradosfläche des Flügels ist und die untere Fläche eine Hochdruckfläche oder Intradosfläche des Flügels ist.

7. Flugzeug (1) nach einem der vorhergehenden Ansprüche, wobei die Oberseite (9) des Vorflügels (5) und die Unterseite (35) des Nachflügels (7) im Allgemeinen bogenförmig sind, sodass sie von der Vorderseite oder der Rückseite des Flugzeugs (1) aus gesehen ein allgemein gekrümmtes Profil (31) bilden; optional, wobei der Negativ-V-Stellungswinkel des Vorflügels (5) auf jeder Seite des Flugzeugs (1) und der Positiv-V-Stellungswinkel des Nachflügels (7) auf jeder Seite des Flugzeugs (1) kontinuierlich und gleichmäßig entlang der Spannweite jedes Flügels vom Rumpf (4) weg zunehmen, um ein von der Vorderseite oder der Hinterseite des Flugzeugs (1) aus gesehen allgemein gekrümmtes oder reifenförmiges Profil (31) zu bilden; optional, wobei die Vorderkante (12) des Vorflügels (5) und die Hinterkante des Nachflügels (7) im Allgemeinen gerade sind, sodass sie von oben oder unten gesehen ein im allgemeinen drachenförmiges oder rhombenförmiges Profil bilden.

8. Flugzeug (1) nach einem der vorhergehenden Ansprüche, wobei die Wirbelleitfläche (23) dazu ausgelegt ist, die Wirbelluftströmung so zu lenken, dass sie auf die Vorderkante (24) des Nachflügels (7) auftrifft; optional, wobei die Wirbelleitfläche (23) dazu ausgelegt ist, die Wirbelluftströmung so zu lenken, dass sie im Allgemeinen in einer Linie mit der Sehne oder einem Staupunkt (25) des Nachflügels (7) liegt.

9. Flugzeug (1) nach einem der vorhergehenden Ansprüche, wobei der Rumpf (4) innerhalb eines ringförmigen Raums (32) verläuft, der zwischen dem Vorflügel (5) und dem Nachflügel (7) gebildet ist; optional, wobei der Vorflügel (5) an einem oberen Abschnitt (8) des Rumpfes (4) angebracht ist, der sich oberhalb einer Nickachse oder Rollachse des Flugzeugs (1) befindet, und wobei der Nachflügel (7) an einem unteren Abschnitt (15) des Rumpfes (4) angebracht ist, der sich unterhalb einer Nickachse oder Rollachse des Flugzeugs (1) befindet.

10. Flugzeug nach Anspruch 1, wobei sich die Strömungskanäle (34) von einer Hoch- oder Niederdruckfläche des Flügels (5, 7) zu einer Nieder- bzw. Hochdruckfläche des Flügels (5, 7) erstrecken; oder wobei sich die Strömungskanäle (34) von einem Staubereich (25) des Flügels (5, 7) zu einer Fläche des Flügels erstrecken, die einen niedrigeren Druck als im Staubereich (25) aufweist.

11. Flugzeug nach Anspruch 1, wobei sich die Strömungskanäle (34) von der Oberseite (9, 22) oder Extradosfläche des Flügels zur Unterseite oder Intradosfläche des Flügels (5, 7) erstrecken; optional, wobei die Wirbelleitfläche (23) dazu ausgelegt ist, den Luftstrom in die Strömungskanäle (34) zu leiten.

12. Flugzeug (1) nach Anspruch 1, 10 oder 11, wobei die Kanäle (34) an mindestens einem schwenkbaren Abschnitt (40) der Flügelspannweite von mindestens einem des Vorflügels (5) und des Nachflügels (7) vorgesehen sind, um für eine Schubvektorisierung zu sorgen; optional, wobei der Vorflügel (5) und der Nachflügel (7) jeweils mindestens zwei schwenkbare Abschnitte (40) umfassen: einen auf jeder Seite des Rumpfs (4) an jedem Flügel (5, 7) .

13. Flugzeug (1) nach Anspruch 12, wobei mindestens ein schwenkbarer Abschnitt (40) der Spannweite unabhängig in Bezug auf mindestens einen anderen schwenkbaren Abschnitt schwenkbar ist, optional, wobei jeder schwenkbare Abschnitt (40) der Spannweite unabhängig in Bezug aufeinander schwenkbar ist; optional, wobei die schwenkbaren Abschnitte (40) dazu ausgelegt sind, von einer Reiseflugkonfiguration zu einer Senkrechtstart- und -landekonfiguration schwenkbar zu sein; wobei die schwenkbaren Abschnitte (40) dazu ausgelegt sind, in der Senkrechtstart- und -landekonfiguration ausreichend zu schwenken, sodass der kombinierte Schubvektor, der durch die in den schwenkbaren Abschnitten vorgesehenen Triebwerke (39) bereitgestellt wird, ausreicht, um im Allgemeinen oder im Wesentlichen gleich dem Gewichtsvektor des Flugzeugs (1) zu sein.

14. Flugzeug (1) nach einem der vorhergehenden Ansprüche, wobei sowohl der Vorflügel (5) als auch der Nachflügel (7) in den Rumpf (4) integriert sind, um einen integrierten Flügelkörper zu bilden; optional, wobei eine obere Fläche (10) des Rumpfes (4) eine gemeinsame obere Fläche (11) mit der oberen Fläche (9) des Vorflügels (5) bildet, und wobei eine untere Fläche des Rumpfes (4) eine gemeinsame untere Fläche mit der unteren Fläche des Nachflügels (7) bildet; optional, wobei der Vorflügel (5) an einem vorderen Abschnitt des Rumpfes (6) angebracht ist und der Nachflügel (7) an einem hinteren Abschnitt des Rumpfes (14) angebracht ist; optional, wobei der Vorflügel (5) vor einer Nickachse des Flugzeugs am Rumpf (4) angebracht ist und wobei der Nachflügel (7) hinter einer Nickachse des Flugzeugs am Rumpf (4) angebracht ist.

## Revendications

1. Aéronef (1) comprenant un fuselage (4), une aile avant à balayage vers l'arrière à dièdre négatif (5) pour générer une portance raccordée à une partie supérieure (8) du fuselage (4), et une aile arrière à balayage vers l'avant à dièdre positif (7) pour générer une portance fixée à une partie inférieure (15) du fuselage (4), l'aile arrière (7) étant agencée pour être verticalement inférieure à l'aile avant (5), dans lequel l'aile avant (5) et l'aile arrière (7) sont mélangées ensemble au niveau de leurs extrémités d'aile, formant une extrémité d'aile commune (20), de telle sorte que la surface inférieure (16) de l'aile avant (5) forme une surface de transition généralement continue et progressive avec la surface supérieure (22) de l'aile arrière (7) de manière à, en vol, former une surface de guidage de tourbillon (23) de telle sorte que le flux d'air tourbillonnaire provenant de l'aile avant (5) est guidé par la surface de guidage de tourbillon (23) sur, ou dans le trajet de, l'aile arrière (7), **caractérisé en ce qu'**au moins l'une des ailes avant (5) et/ou arrière (7) comprend un ou plusieurs conduits de flux (34) s'étendant à travers celle-ci, et **en ce que** les conduits (34) comprennent au moins un moteur (36), par exemple une turbine, fourni dans ceux-ci configuré pour fournir une puissance propulsive à l'aéronef.

2. Aéronef (1) selon la revendication 1, dans lequel la surface de guidage de tourbillon (23) comprend une surface mélangée de la surface inférieure (16) de l'aile arrière (5) et de la surface supérieure (22) de l'aide avant (7) ; facultativement dans lequel la surface supérieure (22) de l'aile avant (5) forme une surface généralement continue et progressive de transition avec la surface inférieure (16) de l'aile arrière (7) ; facultativement dans lequel la surface supérieure (22) de l'aile avant (5) est mélangée avec la surface inférieure (16) de l'aile arrière (7) de manière à former une surface de transition généralement continue et progressive de la surface supérieure (22) de l'aile avant (5) à la surface inférieure (16) de l'aile arrière (7).

3. Aéronef (1) selon l'une quelconque des revendications précédentes, dans lequel l'extrémité d'aile commune (20) s'étend sensiblement dans une direction longitudinale du fuselage (4) ; facultativement dans lequel l'axe longitudinal de l'extrémité d'aile commune (20) est incliné par rapport à un axe longitudinal du fuselage (4) de moins de 45 degrés, facultativement moins de 30 degrés ; facultativement dans lequel l'extrémité d'aile commune (20) a une longueur inférieure à 10, par exemple 9, 8, 7, 6, 5, 4, 3 ou 2 fois sa largeur.

4. Aéronef (1) selon l'une quelconque des revendications précédentes, dans lequel l'extrémité d'aile commune (20) est creuse ; facultativement dans lequel l'extrémité d'aile commune (20) comprend une chambre interne, par exemple pour le stockage de cellules électriques, par exemple configurée pour fournir une puissance propulsive à l'aéronef (1).

5. Aéronef (1) selon l'une quelconque des revendications précédentes, dans lequel l'extrémité d'aile commune (20) comprend une section transversale balayée qui se vrille généralement ou sensiblement le long de la longueur de l'extrémité d'aile commune (20) ; facultativement dans lequel l'extrémité d'aile commune (20) comprend une section transversale latérale sensiblement triangulaire, ou sensiblement triangulaire arrondie (26) ; facultativement dans lequel la surface de guidage de tourbillon (23) est généralement ou sensiblement vrillée le long de sa longueur.

6. Aéronef (1) selon l'une quelconque des revendications précédentes, dans lequel l'extrémité d'aile commune (20) est configurée de telle sorte qu'un flux d'air en envergure sur la surface inférieure (16) de l'aile avant (5) est guidé par la surface de guidage de tourbillon (23) sur la surface supérieure (22) de, ou dans le trajet de, l'aile arrière (7) en se déplaçant sensiblement le long de la longueur de l'extrémité d'aile commune (20) ; facultativement dans lequel la surface supérieure est une surface basse pression, ou une surface extrados, de l'aile, et la surface inférieure est une surface haute pression, ou une surface intrados, de l'aile.

7. Aéronef (1) selon l'une quelconque des revendications précédentes, dans lequel la surface supérieure (9) de l'aile avant (5) et la surface inférieure (35) de l'aile arrière (7) sont généralement arquées de manière à former un profil généralement curviligne (31) lorsqu'il est vu depuis l'avant ou l'arrière de l'aéronef (1) ; facultativement dans lequel l'angle de dièdre négatif de l'aile avant (5) sur chaque côté latéral de l'aéronef (1) et l'angle de dièdre positif de l'aile arrière (7) sur chaque côté latéral de l'aéronef (1) augmente de manière continue et progressive le long de l'envergure de chaque aile à l'écart du fuselage (4) de manière à former un profil généralement curviligne, ou en forme de cerceau (31) lorsqu'il est vu depuis l'avant ou l'arrière de l'aéronef (1) ; facultativement dans lequel le bord d'attaque (12) de l'aile avant (5) et le bord de fuite de l'aile arrière (7) sont généralement droits de manière à former un profil généralement en forme de cerf-volant, ou rhomboïde, lorsqu'il est vu depuis le dessus ou le dessous.

8. Aéronef (1) selon l'une quelconque des revendications précédentes, dans lequel la surface de guidage de tourbillon (23) est configurée pour diriger un flux d'air tourbillonnaire de manière à empiéter sur le bord d'attaque (24) de l'aile arrière (7) ; facultativement dans lequel la surface de guidage de tourbillon (23) est configurée pour diriger un flux d'air tourbillonnaire de manière à être généralement aligné avec la corde ou un point d'arrêt (25) de l'aile arrière (7).

9. Aéronef (1) selon l'une quelconque des revendications précédentes, dans lequel le fuselage (4) passe dans un espace annulaire (32) formé entre l'aile avant (5) et l'aile arrière (7) ; facultativement dans lequel l'aile avant (5) est fixée à une partie supérieure (8) du fuselage (4) qui est au-dessus d'un axe de tangage, ou d'un axe de roulis, de l'aéronef (1) et dans lequel l'aile arrière (7) est fixée à une partie inférieure (15) du fuselage (4) qui est en dessous d'un axe de tangage, ou d'un axe de roulis, de l'aéronef (1).

10. Aéronef selon la revendication 1, dans lequel les conduits de flux (34) s'étendent d'une surface haute ou basse pression de l'aile (5, 7) à une surface basse ou haute pression de l'aile (5, 7), respectivement ; ou dans lequel les conduits de flux (34) s'étendent d'une zone de stagnation (25) de l'aile (5, 7) à une surface de l'aile ayant une pression plus basse qu'au niveau de la zone de stagnation (25) .

11. Aéronef selon la revendication 1, dans lequel les conduits de flux (34) s'étendent de la surface supérieure (9, 22), ou surface extrados, de l'aile à la surface inférieure, ou surface intrados, de l'aile (5, 7) ; facultativement dans lequel la surface de guidage de tourbillon (23) est configurée pour diriger un flux d'air dans les conduits de flux (34).

12. Aéronef (1) selon la revendication 1, 10 ou 11, dans lequel les conduits (34) sont fournis sur au moins une section pivotante (40) de l'envergure d'aile d'au moins l'une des ailes avant (5) et arrière (7) de manière à fournir une orientation de poussée ; facultativement dans lequel l'aile avant (5) et l'aile arrière (7) comprennent chacune au moins deux sections pivotantes (40) : une sur chaque côté du fuselage (4) sur chaque aile (5, 7).

13. Aéronef (1) selon la revendication 12, dans lequel au moins une section pivotante (40) de l'envergure d'aile peut pivoter indépendamment par rapport à au moins une autre section pivotante, facultativement dans lequel chaque section pivotante (40) de l'envergure d'aile peut pivoter indépendamment l'une par rapport à l'autre ; facultativement dans lequel les sections pivotantes (40) sont configurées pour pouvoir pivoter d'une configuration de croisière à une configuration de décollage et d'atterrissage verticale ; facultativement dans lequel dans la configuration de décollage et d'atterrissage verticale, les sections pivotantes (40) sont configurées pour pivoter suffisamment de telle sorte que le vecteur de poussée combiné fourni par les moteurs (39) fournis à l'intérieur des sections pivotantes est suffisant pour égaler généralement ou sensiblement égaler le vecteur de poids de l'aéronef (1).

14. Aéronef (1) selon l'une quelconque des revendications précédentes, dans lequel à la fois les ailes avant (5) et arrière (7) sont mélangées dans le fuselage (4) de manière à former un corps d'aile mélangé ; facultativement dans lequel une surface supérieure (10) du fuselage (4) forme une surface supérieure commune mélangée (11) avec la surface supérieure (9) de l'aile avant (5), et dans lequel une surface inférieure du fuselage (4) forme une surface inférieure commune mélangée avec la surface inférieure de l'aile arrière (7) ; facultativement dans lequel l'aile avant (5) est fixée à une section avant du fuselage (6) et l'aile arrière (7) est fixée à une section arrière du fuselage (14) ; facultativement dans lequel l'aile avant (5) est fixée au fuselage (4) en avant d'un axe de tangage de l'aéronef et dans lequel l'aile arrière (7) est fixée au fuselage (4) derrière un axe de tangage de l'aéronef.
